**Europäisches Patentamt**

**European Patent Office**

**Office européen des brevets**

(19)

(11) **EP 1 724 956 A1**

(12) **EUROPEAN PATENT APPLICATION**
published in accordance with Art. 158(3) EPC

(43) Date of publication:
**22.11.2006 Bulletin 2006/47**

(51) Int Cl.:
**H04J 11/00** (2006.01)

(21) Application number: **05727178.5**

(22) Date of filing: **23.03.2005**

(86) International application number:
**PCT/JP2005/005237**

(87) International publication number:
**WO 2005/093979 (06.10.2005 Gazette 2005/40)**

(84) Designated Contracting States:
**DE FR GB**

(30) Priority: **25.03.2004 JP 2004089726**

(71) Applicant: **MATSUSHITA ELECTRIC INDUSTRIAL CO., LTD.**
**Osaka 571-8501 (JP)**

(72) Inventors:
• **IIZUKA, Katsumi**
  **Matsushita Electric Ind. Co.,Ltd.**
  **1-3-7 Shiromi, Chuo-ku,**
  **Osaka 540-6319 (JP)**

• **SASAKI, Makoto**
  **Matsushita Electric Ind. Co.,Ltd.**
  **1-3-7 Shiromi, Chuo-ku,**
  **Osaka 540-6319 (JP)**
• **ENOKI, Takashi**
  **Matsushita Electric Ind. Co.,Ltd.**
  **1-3-7 Shiromi, Chuo-ku,**
  **Osaka 540-6319 (JP)**

(74) Representative: **Grünecker, Kinkeldey,**
**Stockmair & Schwanhäusser**
**Anwaltssozietät**
**Maximilianstrasse 58**
**80538 München (DE)**

(54) **RADIO SYSTEM AND RADIO COMMUNICATION DEVICE**

(57) There are provided a radio system and a radio communication device capable of removing a phase noise superimposed on a reception signal and a phase noise generated in the system of a reception radio unit. In this system, a radio transmission device (101) transmits a multiplex signal multiplexed so that a pilot signal is placed on the center frequency. A radio reception device (151) frequency-multiplies a reception signal by a pilot signal having the same frequency error and phase noise as the reception signal, and frequency-multiplies the phase noise contained in a local oscillation signal used when subjecting the reception signal to frequency conversion, by using the signal having the same phase noise. Thus, it is possible to remove the frequency error and phase noise contained in the reception signal and the phase noise in the reception system.

FIG.1

EP 1 724 956 A1

**Description**

Technical Field

The present invention relates to a radio system and radio communication apparatus, and more particularly, to a radio system and radio communication apparatus having an excellent phase noise characteristic.

Background Art

Conventionally, various measures have been adopted to provide a radio system having an excellent phase noise characteristic. An example of this conventional radio system having an excellent phase noise characteristic is described in Patent Document 1. This radio system is provided with a local noise canceller shown in FIG. 10 to improve the phase noise characteristic.

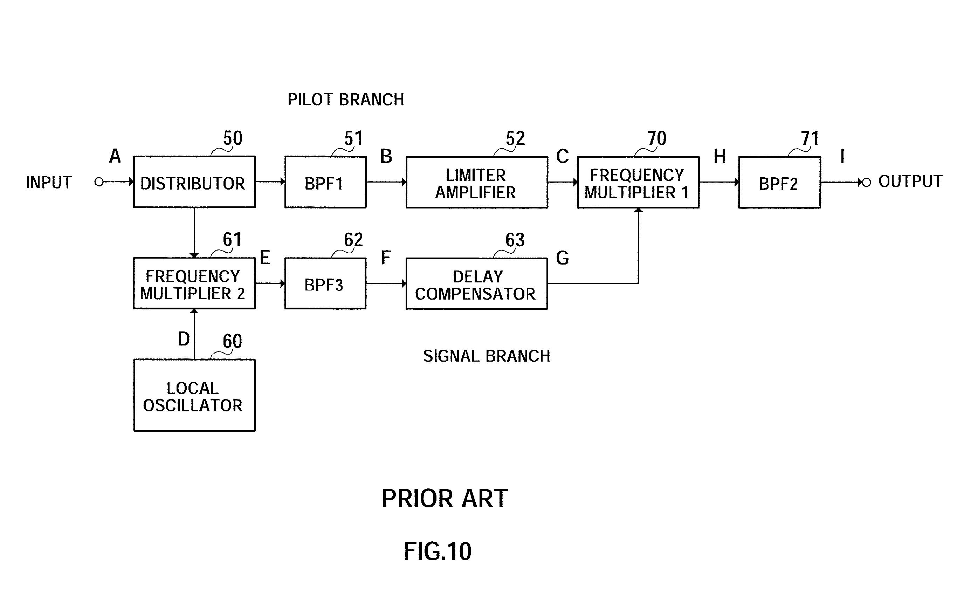

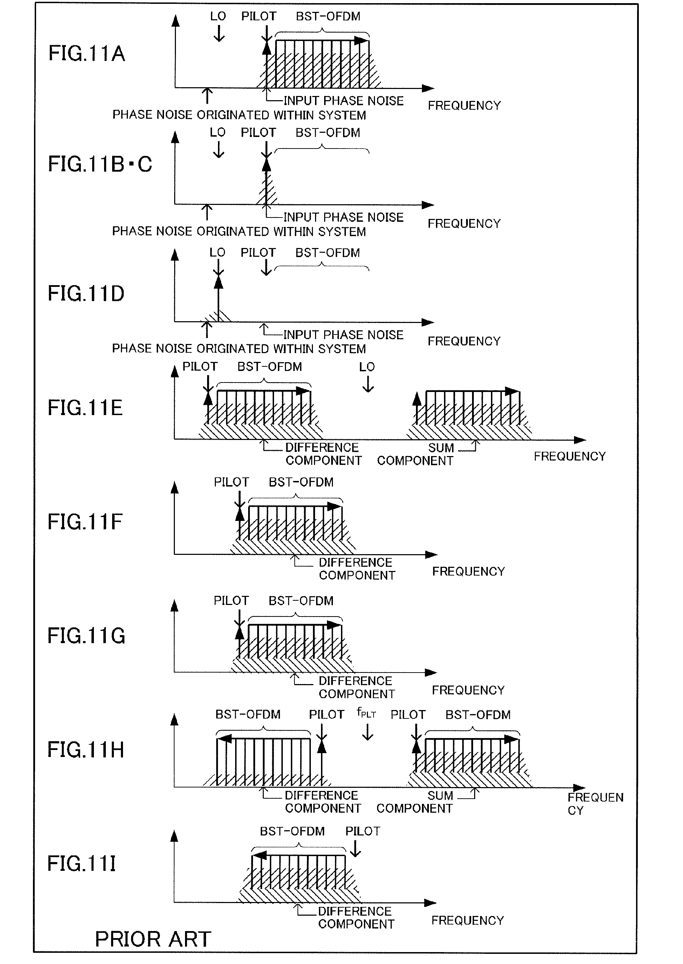

The operations of this local noise canceller will be explained with reference to FIG. 10 and FIG. 11 . FIG. 11 is characteristic diagrams showing frequency characteristics of components of the local noise canceller shown in FIG.10.

As shown in FIG.11A, suppose that, in an input signal, modulated IF signals (BST-OFDM) and pilot carrier (PILOT) are multiplexed, and input phase noise (part expressed by bold hatching) is superimposed.

Here, when frequency of the input pilot carrier is $f_{PLT}$, frequency of the input signal is $f_{sig}$, and input phase noise is $\theta(t)$, input phase noise $\theta(t)$ is superimposed on $f_{PLT}$ and $f_{sig}$. Therefore, $f_{PLT}$ and $f_{sig}$ are expressed as follows:

$$f_{PLT} \angle \theta(t)$$

$$f_{sig} \angle \theta(t)$$

Input signal A is distributed by distributor 50, and one signal is outputted to a pilot branch and the other signal is outputted to a signal branch. In the pilot branch, the one signal distributed by distributor 50 is band-limited by bandpass filter 51, and only a pilot carrier component passes to be extracted and further subjected to limiter amplification by limiter amplifier 52.

At this time, the frequency characteristic of output signal B from bandpass filter 51 and output signal C from limiter amplifier 52, in which the IF signal component is removed, include, as shown in FIGs.11B and 11C, only the pilot carrier component and input phase noise $\theta(t)$ superimposed thereon.

At this time, a delay is produced at bandpass filter 51, and if this delay time is $\tau_{BPF1}$, input phase noise $\theta(t-\tau_{BPF1})$ delayed by $\tau_{BPF1}$ is superimposed on input pilot carrier frequency $f_{PLT}$, and, therefore, $f_{PLT}$ is expressed as follows:

$$f_{PLT} \angle \theta(t - \tau_{BPF1})$$

On the other hand, in the signal branch, local oscillation signal D is outputted from local oscillator 60. Here, the frequency characteristic of local oscillation signal D outputted from local oscillator 60 includes a signal of local oscillation frequency (LO) and phase noise produced by a station within the system which is superimposed thereon as shown in FIG.11D.

Here, if the local oscillation signal frequency within the system is $f_{LO}$ and the local oscillation signal phase noise within the system is $\phi(t)$, local oscillation signal phase noise $\phi(t)$ within the system is superimposed on the local oscillation signal frequency $f_{LO}$ within the system, and, therefore, $f_{LO}$ is expressed as follows:

$$f_{LO} \angle \phi(t)$$

Then, in the signal branch, the signal outputted from distributor 50 is subjected to frequency conversion by local oscillation signal D from local oscillator 60 by frequency converter 61, and signal E is outputted.

Here, the frequency characteristic of signal E outputted from frequency converter 61 includes a sum component and difference component between input signal A and local oscillation signal D as shown in FIG.11E. Thus, relationships between the signal components included in signal E and phase noise to be superimposed are expressed as follows:

$$f_{PLT}-f_{LO} \angle \theta(t)-\phi(t)$$

$$f_{sig}-f_{LO} \angle \theta(t)-\phi(t)$$

$$f_{PLT}+f_{LO} \angle \theta(t)+\phi(t)$$

$$f_{sig}+f_{LO} \angle \theta(t)+\phi(t)$$

Signal E subjected to frequency conversion is then band-limited by bandpass filter 62 so that only the difference component passes, and is outputted from bandpass filter 62 as signal F. The frequency characteristics of signal F, in which the sum component in E is removed, include, as shown in FIG.11F, only the difference component.

At this time, a delay is produced at bandpass filter 62, and if this delay time is $\tau_{BPF2}$, a delay by $\tau_{BPF2}$ is produced in the phase noise superimposed on the extracted difference component. The relationships between the signal components included in signal F and phase noise to be superimposed are expressed as follows:

$$f_{PLT}-f_{LO} \angle \theta(t-\tau_{BPF2})-\phi(t-\tau_{BPF2})$$

$$f_{sig}-f_{LO} \angle \theta(t-\tau_{BPF2})-\phi(t-\tau_{BPF2})$$

Then, a delay is added to signal F in delay compensator 63 so that the delay time is equivalent to the delay time at bandpass filter 51 in the pilot branch, and signal F is outputted as signal G.

Here, when the delay time of bandpass filter 62 is $\tau_{BPF2}$ against delay time $\tau_{BPE1}$ of bandpass filter 51 and the delay time at delay compensator 63 is $\Delta t$, delay compensator 63 equalizes the delay time difference with the pilot branch by adding delay $\Delta t$ to signal F as follows:

$$\tau_{BPF1}=\tau_{BPF2}+\Delta t$$

As a result, the frequency characteristic of signal G does not change and is as shown in FIG.11G, and the relationships between the signal components included in signal G and phase noise to be superimposed, to which delay $\Delta t$ is added, are as follows:

$$f_{PLT}-f_{LO} \angle \theta(t-\tau_{BPF2}-\Delta t)-\phi(t-\tau_{BPF2}-\Delta t)$$

$$f_{sig}-f_{LO} \angle \theta(t-\tau_{BPF2}-\Delta t)-\phi(t-\tau_{BPF2}-\Delta t)$$

Signal G in the signal branch and signal C outputted from above-described limiter amplifier 52 in the pilot branch are then subjected to frequency conversion in frequency converter 70, and outputted as signal H.

Here, the frequency characteristic of signal H outputted from frequency converter 70 includes the sum component and difference component between signal G and signal C as shown in FIG.11H. Therefore, the relationships between the signal components included in signal H and phase noise to be superimposed are expressed as follows:

$$f_{PLT} - (f_{PLT} - f_{LO}) \angle \theta(t - \tau_{BPF1}) - \{\theta(t - \tau_{BPF2} - \Delta t) - \phi(t - \tau_{BPF2} - \Delta t)\}$$

$$f_{PLT} - (f_{sig} - f_{LO}) \angle \theta(t - \tau_{BPF1}) - \{\theta(t - \tau_{BPF2} - \Delta t) - \phi(t - \tau_{BPF2} - \Delta t)\}$$

$$f_{PLT} + (f_{PLT} - f_{LO}) \angle \theta(t - \tau_{BPF1}) + \{\theta(t - \tau_{BPF2} - \Delta t) - \phi(t - \tau_{BPF2} - \Delta t)\}$$

$$f_{PLT} + (f_{sig} - f_{LO}) \angle \theta(t - \tau_{BPF1}) + \{\theta(t - \tau_{BPF2} - \Delta t) - \phi(t - \tau_{BPF2} - \Delta t)\}$$

Here, as shown above, delay compensator 63 equalizes the delay time difference between the signal branch and pilot branch by adding delay Δt as follows:

$$\tau_{BPF1} = \tau_{BPF2} + \Delta t$$

The expressions are summarized as follows:

$$f_{LO} \angle \phi(t - \tau_{BPF2} - \Delta t)$$

$$f_{LO} - (f_{sig} - f_{PLT}) \angle \phi(t - \tau_{BPF2} - \Delta t)$$

$$2 \times f_{PLT} - f_{LO} \angle 2 \times \theta(t - \tau_{BPF1}) - \phi(t - \tau_{BPF2} - \Delta t)$$

$$f_{PLT} + (f_{sig} - f_{LO}) \angle 2 \times \theta(t - \tau_{BPF1}) - \phi(t - \tau_{BPF2} - \Delta t)$$

Here, when attention is focused on the difference component, the frequency of the output signal component is frequency of a local oscillation signal within the system ($f_{LO}$) regardless of a frequency of the input signal, and is, namely, constant. Furthermore, when attention is focused on the pilot carrier, the sideband of the signal is reversed between input and output.

Furthermore, for the phase noise of the output signal, input phase noise θ(x) is canceled, and phase noise φ (x) of the local oscillation signal within the system is included instead. That is, it is understandable that when phase noise φ(x) of the local oscillation signal within the system is small enough, the phase noise of the input signal is sufficiently reduced and outputted.

Thus, signal H subj ected to frequency conversion in frequency converter 70 is band-limited in bandpass filter 71 so that only the difference component and the signal component pass, and signal I is outputted. The frequency characteristic of signal I, in which the sum component and the pilot carrier component in the difference component are removed from H, includes, as shown in FIG.11I, only the difference component. The relationship between the signal component included in signal I and phase noise to be superimposed is as follows:

$$f_{LO} - (f_{sig} - f_{PLT}) \angle \phi (t - \tau_{BPF2} - \Delta t)$$

According to the above-described principles of frequency synchronization and noise cancellation by a local noise canceller, even if an input signal has a frequency deviation, for example, it is possible to obtain an output signal at a frequency following the local oscillation frequency having a high degree of stability with high frequency accuracy generated by local oscillator 60 and thereby eliminate the frequency deviation of the input signal.

Furthermore, for the phase noise of the output signal, the phase noise θ(x) superimposed on the input signal is canceled, and, only phase noise φ(x) of the local oscillation signal within the system is included instead, so that, if phase noise φ(x) of the local oscillation signal within the system is small enough, the phase noise of the input signal is sufficiently reduced and outputted.

Patent Document 1: Japanese Patent Application Laid-Open No.2002-152158

Disclosure of Invention

Problems to be Solved by the Invention

However, when a signal in a high-frequency band is used for communication, the oscillating frequency of the local oscillation section increases, and, therefore, the phase noise produced from the local oscillation section within the system also increases. For this reason, according to the conventional radio system, the phase noise of the local oscillation signal within the system remains, and therefore, there is a problem that communication quality deteriorates due to phase noise produced from the local oscillation section within the system.

It is therefore an object of the present invention to provide a radio system and radio communication apparatus capable of eliminating not only phase noise superimposed on a received signal but also phase noise produced inside the system of a reception radio section.

Means for Solving the Problem

The radio system of the present invention adopts a configuration having: a radio transmission apparatus having a transmission section that transmits a radio signal in which a modulation signal having no signal on a center frequency and a pilot signal having a center frequency identical to the center frequency are multiplexed; and a radio reception apparatus having: an antenna that receives the radio signal; a first distribution section that distributes the received signal received at the antenna to two directions; an extraction section that extracts a signal component corresponding to the pilot signal from one received signal distributed by the first distribution section; a second distribution section that distributes a local oscillation signal from a local oscillation signal generation section to two directions; a first frequencymultiplication section that performs frequency conversion on the signal component corresponding to the extracted pilot signal using the one local oscillation signal distributed by the second distribution section; a first delay addition section that gives a delay to the other received signal distributed by the first distribution section; a second frequency multiplication section that frequency-multiplies the signal component corresponding to the pilot signal subjected to frequency conversion in the first frequency multiplication section by the other received signal to which the delay has been added in the first delay addition section; a second delay addition section that gives a delay to the other local oscillation signal distributed by the second distribution section; and a quadrature demodulation section that frequency-multiplies the received signal after frequency multiplication in the second frequency multiplication section by the other local oscillation signal to which the delay has been added in the second delay addition section, and performs quadrature demodulation.

The radio reception apparatus of the present invention adopts a configuration having: an antenna that receives a radio signal in which a modulation signal having no signal on a center frequency and a pilot signal having a center frequency identical to the center frequency are multiplexed; a first distribution section that distributes the received signal received at the antenna to two directions; an extraction section that extracts a signal component corresponding to the pilot signal from one received signal distributed by the first distribution section; a second distribution section that distributes a local oscillation signal from a local oscillation signal generation section to two directions; a first frequency multiplication section that performs frequency conversion on the signal component corresponding to the extracted pilot signal using the one local oscillation signal distributed by the second distribution section; a first delay addition section that gives a delay to the other received signal distributed by the first distribution section; a second frequency multiplication section that frequency-multiplies a signal component corresponding to the pilot signal subjected to frequency conversion in the first frequency multiplication section by the other received signal to which the delay has been added in the first delay addition section; a second delay addition section that gives a delay to the other local oscillation signal distributed by the second distribution section; and a quadrature demodulation section that frequency-multiplies the received signal after frequency multiplication in the second frequency multiplication section by the other local oscillation signal to which the delay has been added by the second delay addition section, and performs quadrature demodulation.

Advantageous Effect of the Invention

According to the present invention, it is possible to provide a radio system and radio communication apparatus capable of improving a phase noise characteristics by eliminating phase noise superimposed on a received signal and phase noise produced within the system of the reception radio section.

Brief Description of Drawings

FIG.1 is a block diagram showing a configuration of a radio system according to Embodiment 1;
FIG.2 is a characteristic diagram showing frequencies of signals in a radio system;
FIG.3 is a block diagram showing a configuration of a radio system according to Embodiment 2;
FIG.4 is a block diagram showing a configuration of a radio system according to Embodiment 3;
FIG.5 is a block diagram showing a configuration of a radio system according to Embodiment 4;
FIG.6 is a block diagram showing a configuration of a radio system according to Embodiment 5;
FIG.7 is a block diagram showing a configuration of a radio system according to Embodiment 6;
FIG.8 is a block diagram showing a configuration of a radio system according to Embodiment 7;
FIG.9 is a block diagram showing a configuration of a radio system according to Embodiment 8;
FIG.10 is a block diagram showing a configuration of a local noise canceller provided for a conventional radio system; and
FIG. 11 is a characteristic diagram showing frequency characteristics of components of the local noise canceller in FIG.10.

Best Mode for Carrying Out the Invention

Embodiments of the present invention will be described in detail below with reference now to the accompanying drawings.

(Embodiment 1)

First, a radio system according to this embodiment will be explained with reference to the drawings.

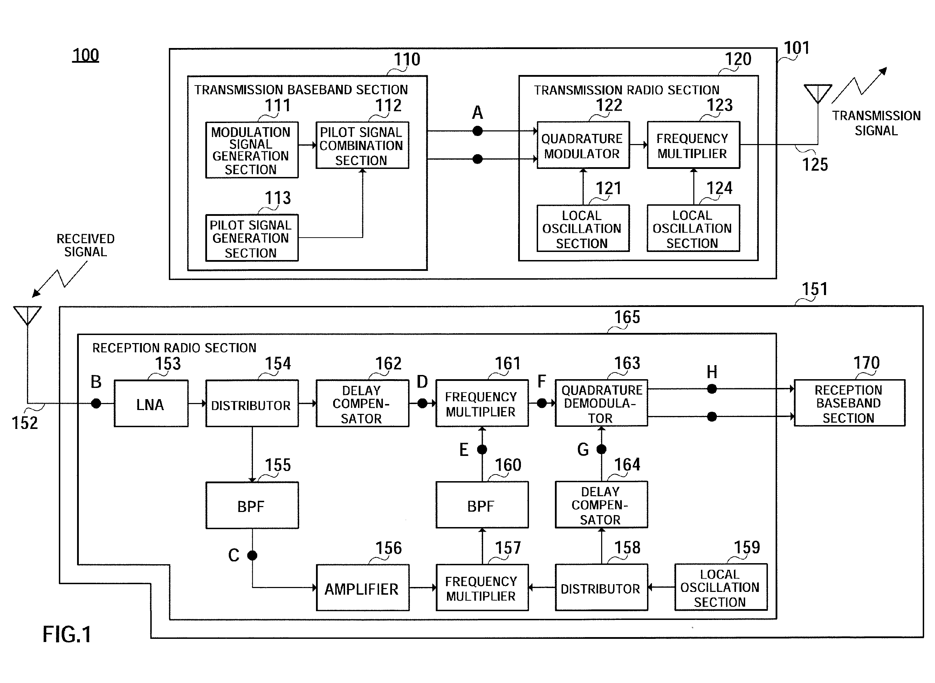

FIG.1 is a block diagram showing a configuration of a radio system according to this embodiment. As shown in FIG.1, radio system 100 is provided with radio transmission apparatus 101 and radio reception apparatus 151.
This radio transmission apparatus 101 is provided with transmission baseband section 110 that generates a baseband signal and transmission radio section 120 that performs predetermined processing on the baseband signal and transmits the result as an RF signal.
In this transmission baseband section 110, modulation signal generation section 111 generates a modulation signal and gives it to pilot signal combination section 112. This modulation signal maybe anymodulation signal except for a modulation signal having a signal on a center frequency part on the frequency axis, and may also be, for example, an OFDM signal and multicarrier CDMA.
This pilot signal combination section 112 combines the modulation signal received from modulation signal generation section 111 and a pilot signal received from pilot signal generation section 113 and gives the combined signal to transmission radio section 120.
On the other hand, in transmission radio section 120, local oscillation section 121 generates a local oscillation signal and gives it to quadrature modulator 122.
Quadrature modulator 122 performs quadrature modulation on the combined signal of the modulation signal and pilot signal outputted from pilot signal combination section 112 of the above-described transmission baseband section 110 using the local oscillation signal from local oscillation section 121 and gives the quadrature-modulated signal to frequency multiplier 123.

Frequency multiplier 123 converts the signal subjected to quadrature modulation in quadrature modulator 122 to a radio signal using a local oscillation signal received from local oscillation section 124. This radio signal is transmitted through antenna 125.

On the other hand, radio reception apparatus 151 has reception radio section 165 and reception baseband section 170 that processes a signal from reception radio section 165.

In reception radio section 165, antenna 152 receives a radio signal transmitted from radio transmission apparatus 101. This received radio signal is amplified in amplifier 153 and then given to distributor 154.

Distributor 154 distributes the signal received from amplifier 153 to two routes of a modulation signal branch and pilot branch.

In the pilot branch, bandpass filter 155 extracts only a pilot signal component from the signal distributed by distributor 154. This extracted pilot signal component is amplified in amplifier 156 and then given to frequency multiplier 157.

Frequency multiplier 157 frequency-multiplies the signal amplified in amplifier 156 using a local oscillation signal of local oscillation section 159, which is distributed by distributor 158, and gives the frequency-multiplied signal to bandpass filter 160.

Bandpass filter 160 extracts only a signal of a desired frequency band from the signals outputted from frequency multiplier 157. The signal extracted by bandpass filter 160 is given to frequency multiplier 161.

On the other hand, in the modulation signal branch, delay compensator 162 delays the signal received from distributor 154 so as to be synchronized with a signal reaching frequency multiplier 161 through the pilot branch, and gives the delayed signal to frequency multiplier 161.

Frequency multiplier 161 frequency-multiplies the output signal from delay compensator 162 by the signal extracted by bandpass filter 160, and outputs the multiplied signal to quadrature demodulator 163.

Delay compensator 164 adds a predetermined delay to the local oscillation signal of local oscillation section 159, which is distributed by distributor 158, and outputs the delayed signal to quadrature demodulator 163.

Quadrature demodulator 163 performs quadrature demodulation on the output signal from frequency multiplier 161 by the output signal from delay compensator 164 and outputs the signal subjected to quadrature demodulation to reception baseband section 170.

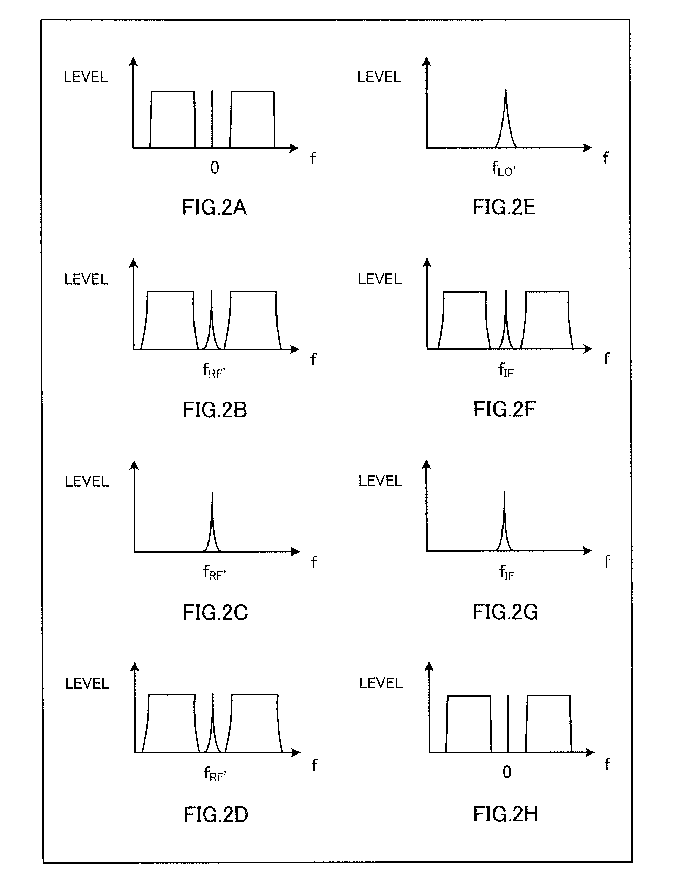

Next, the operations of radio system 100 will be explained with reference to FIG.1 and FIG.2.

FIG.2 is a characteristic diagram showing a frequency characteristic of signals in radio system 100. FIGs.2A to 2H show frequency characteristics of signals at the parts in FIG.1 where the corresponding alphabets are assigned.

Combined signal A of the modulation signal and pilot signal outputted from transmission baseband section 110 has a frequency characteristic shown in FIG.2A. As described above, here, the pilot signal is made to be located at the center of the frequency axis of the modulation signal.

Combined signal A is subjected to frequency conversion to be a radio signal as a transmission signal at transmission radio section 120, and outputted from antenna 125.

When the phase noise included in a local oscillation signal of local oscillation section 121 is $\theta_{RFtx}$, the phase noise included in a local oscillation signal of local oscillation section 124 is $\theta_{RFtx}$, the frequency of the transmission signal is $f_{RF}$, and phase noise is $\theta_{tx}$, the transmission signal is expressed as follows:

$$f_{RF} \angle \theta_{tx}(t)$$

$$\theta_{tx}(t) = \theta_{RFtx}(t) + \theta_{IFtx}(t)$$

Received signal B received at radio reception apparatus 151 includes not only the phase noise added at transmission radio section 120 but also phase noise and frequency errors in a propagation path, and, therefore, it has a frequency characteristic shown in FIG.2B. If the frequency upon reception is $f_{RF}'$ and phase noise is $\theta_{RF}$, they can be expressed as follows:

$$f_{RF}' \angle \theta_{RF}(t)$$

$$f_{RF}' = f_{RF} + f'$$

$$\theta_{RF}(t) = \theta_{tx}(t) + \theta_c(t)$$

In addition, f' is a frequency error produced in the propagation path, and $\theta_c$ is a phase error produced in the propagation path.

Radio signal B received at antenna 152 is amplified in amplifier 153 and distributed in distributor 154 to two directions of a modulation signal branch and a pilot branch.

In the pilot branch, only pilot signal component C is extracted by bandpass filter 155 from the signals distributed in distributor 154, and has a frequency characteristic shown in FIG.2C. This extracted pilot signal component C is amplified by amplifier 156 and then given to frequency multiplier 157.

Frequency multiplier 157 frequency-multiplies the signal amplified in amplifier 156 using a local oscillation signal of local oscillation section 159, which is distributed by distributor 158, and gives the frequency-multiplied signal to bandpass filter 160.

Bandpass filter 160 extracts signal E which includes only the difference component from the signals outputted from frequency multiplier 157. Signal E extracted by bandpass filter 160 has a frequency characteristics shown in FIG. 2E and is given to frequency multiplier 161.

The frequency and phase noise of input signal E from bandpass filter 160 to frequency multiplier 161 are given by the following expression:

$$(f_{RF}' - f_{IF}) \angle [\theta_{RF}(t + \tau_p) - \theta_{IF}(t + \tau_{IF}')]$$

Suppose that the frequency of the local oscillation signal of local oscillation section 159 is $f_{IF}$, phase error is $\theta_{IF}$, an amount of delay produced when signal E is inputted from distributor 158 to frequency multiplier 161 through frequency multiplier 157 and bandpass filter 160 is $\tau_{IF}'$, and an amount of delay produced when signal E is inputted from distributor 154 to frequency multiplier 161 through bandpass filter 155, amplifier 156, frequency multiplier 157 and, bandpass filter 160 is $\tau_p$.

On the other hand, in the modulation signal branch, the signal distributed by distributor 154 is given the amount of delay $\tau_s$ in delay compensator 162, and outputted to frequency multiplier 161 as signal D. Delay compensator 162 adds the amount of delay so that $\tau_s$ is equal to $\tau_p$.

This signal D has a frequency characteristic shown in FIG.2D, and the frequency and phase noise are given by the following expression:

$$f_{RF}' \angle \theta_{RF}(t + \tau_s)$$

$$\tau_s = \tau_p$$

Frequency multiplier 161 frequency-multiplies signal D using output signal E from bandpass filter 160, and outputs the signal to quadrature demodulator 163 as signal F.

This signal F has a frequency characteristic shown in FIG.2F, and the frequency and phase are as follows:

$$f_{RF}' \angle \theta_{RF}(t + \tau_s) - (f_{RF}' - f_{IF}) \angle [\theta_{RF}(t + \tau_p) - \theta_{IF}(t + \tau_{IF}')]$$

$$= f_{IF} \angle \theta_{IF}(t + \tau_{IF}')$$

This indicates that, in signal F, frequency error f' andphasenoise $\theta_{RF}$ included upon reception are removed, and only phase error $\theta_{IF}$ produced within the system remains.

Quadrature demodulator 163 performs quadrature demodulation on signal F using signal G which is distributed from distributor 158 and then given the amount of delay $\tau_{IFp}$ from delay compensator 164, and outputs the signal to reception baseband section 170 as signal H. When the amount of delay produced when the signal from distributor 158 is inputted to quadrature demodulator 163 through frequency multiplier 157, bandpass filter 160 and frequency multiplier 161 is $\tau_{IFs}$, delay compensator 164 adds the amount of delay so that $\tau_{IFp}$ is equals to $\tau_{IFS}$.

Output signal G of delay compensator 164 has a frequency characteristic shown in FIG.2G, and the characteristic is expressed by the following expression:

$$f_{IF} \angle \theta_{IF}(t + \tau_{IFp})$$

As described above, output signal F of frequency multiplier 161 is expressed by: $f_{IF}\angle\theta_{IF}(t+\tau_{IF}')$

Since $\tau_{IFp}$ is equal to $\tau_{IFs}$ here, signal G and signal F have completely the same frequency and phase noise. For this reason, frequency errors and phase noise can be totally removed, so that signal H, form which frequency errors and phase noise are totally removed, has a frequency characteristic shown in FIG.2H. This signal H indicates a baseband signal after quadrature demodulation.

As shown above, radio transmission apparatus 101 multiplexes a transmission signal so that a pilot signal is on the center frequency and transmits the result, and radio reception apparatus 151 performs frequency multiplication using a pilot signal having the same frequency error and phase noise as those of a received signal, and performs quadrature demodulation on phase noise produced within the system using a signal having the same phase noise. For this reason, it is possible to remove frequency errors and phase errors included in the received signal, and also totally remove phase errors produced within the system.

When bandpass filter 155 extracts the pilot signal component, phase noise outside the band of bandpass filter 155 is not extracted, and is therefore necessary to be suppressed in transmission radio section 120. In this embodiment, local oscillation section 121 and local oscillation section 124 can suppress the phase noise.

For example, local oscillation section 121 and local oscillation section 124 can be configured as a PLL frequency synthesizer. In this case, by designing a loop bandwidth of the PLL frequency synthesizer to be equal or smaller than the bandwidth of bandpass filter 155, it is possible to suppress phase noise of local oscillation section 121 and local oscillation section 124 which exist outside the passband of bandpass filter 155, and remove phase noise produced in local oscillation section 121 and local oscillation section 124.

Thus, according to Embodiment 1, radio reception apparatus 151 is provided with: antenna 152 that receives a radio signal in which a modulation signal having no signal on a center frequency and a pilot signal having a center frequency identical to the center frequency are multiplexed; distributor 154 that distributes the received signal received at antenna 152 to two directions; bandpass filter 155 that extracts a signal component corresponding to the pilot signal from the one received signal distributed from distributor 154; frequency multiplier 157 that performs frequency conversion on the signal component corresponding to the extracted pilot signal using one local oscillation signal which is generated by local oscillation section 159 and distributed to the two directions by distributor 158; delay compensator 162 that gives a delay to the other received signal distributed by distributor 154; frequency multiplier 161 that frequency-multiplies the signal component corresponding to the pilot signal subjected to frequency conversion in frequency multiplier 157 by the other received signal to which a delay is added in delay compensator 162; delay compensator 164 that gives a delay to the other local oscillation signal distributed to the two directions by distributor 158; and quadrature demodulator 163 that frequency-multiplies the received signal after the frequency multiplication by frequency multiplier 161 in the other local oscillation signal to which a delay is added by delay compensator 164, and performs quadrature demodulation.

By so doing, frequency multiplication is performed using a pilot signal having the same frequency error and phase noise as those of the received signal, and quadrature demodulation is also performed using a signal having the same phase noise with regard to phase noise produced within the system, so that it is possible to remove frequency errors and phase errors included in the received signal, and completely remove phase errors produced within the system.

(Embodiment 2)

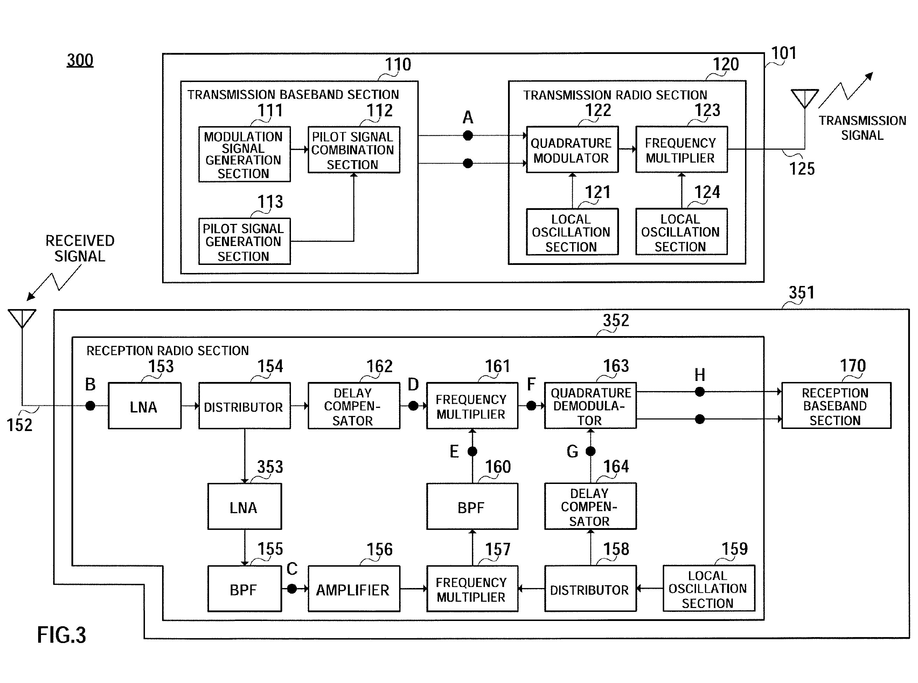

FIG.3 is a block diagram showing a configuration of a radio system according to this Embodiment 2. Compared to radio reception apparatus 151 of radio system 100 in Embodiment 1, radio reception apparatus 351 of radio system 300 shown in FIG.3 only differs in that amplifier 353 is added between distributor 154 and bandpass filter 155, and the rest of the components are the same. Therefore, the explanations of the same components will be omitted, and only different parts will be explained.

When a modulation signal branch and a pilot signal branch are compared, the pilot signal branch is inferior to the modulation signal branch in an NF characteristic and C/N characteristic in a weak electric field because the pilot signal branch includes bandpass filter 155 and bandpass filter 160. Attention is focused on this fact, and amplifier 353 are added in this embodiment between distributor 154 and bandpass filter 155 in reception radio section 352 of radio reception apparatus 351.

In reception radio section 352, in the pilot branch, amplifier 353 amplifies a signal distributed by distributor 154, and gives the amplified signal to bandpass filter 155.

Bandpass filter 155 extracts only a pilot signal component from the signal amplified by amplifier 353.

As described above, by adding amplifier 353 before bandpass filter 155, it is possible to improve the NF characteristic and C/N characteristic of the pilot branch in a weak electric field.

Thus, according to Embodiment 2, radio reception apparatus 351 is provided with: antenna 152 that receives a radio signal in which a modulation signal having no signal on a center frequency and a pilot signal having a center frequency identical to the center frequency are multiplexed; distributor 154 that distributes the received signal received at antenna 152 to two directions; bandpass filter 155 that extracts a signal component corresponding to the pilot signal from the one received signal distributed from distributor 154; frequency multiplier 157 that performs frequency conversion on the signal component corresponding to the extracted pilot signal using one local oscillation signal which is generated by local oscillation section 159 and distributed to the two directions by distributor 158; delay compensator 162 that gives a delay to the other received signal distributed by distributor 154; frequency multiplier 161 that frequency-multiplies the signal component corresponding to the pilot signal subjected to frequency conversion in frequency multiplier 157 by the other received signal to which a delay is added in delay compensator 162; delay compensator 164 that gives a delay to the other local oscillation signal distributed to the two directions by distributor 158; and quadrature demodulator 163 that frequency-multiplies the received signal after the frequency multiplication by frequency multiplier 161 in the other local oscillation signal to which a delay is added by delay compensator 164, and performs quadrature demodulation.

Furthermore, radio reception apparatus 351 is provided with amplifier 353 that amplifies the one signal distributed from distributor 154, and outputs the amplified signal to bandpass filter 155.

By so doing, it is possible to improve the NF characteristic and the C/N characteristic in a weak electric field of the signal (signal E) inputted to frequency multiplier 161 through the pilot branch, and thereby further improve the phase noise characteristic.

(Embodiment 3)

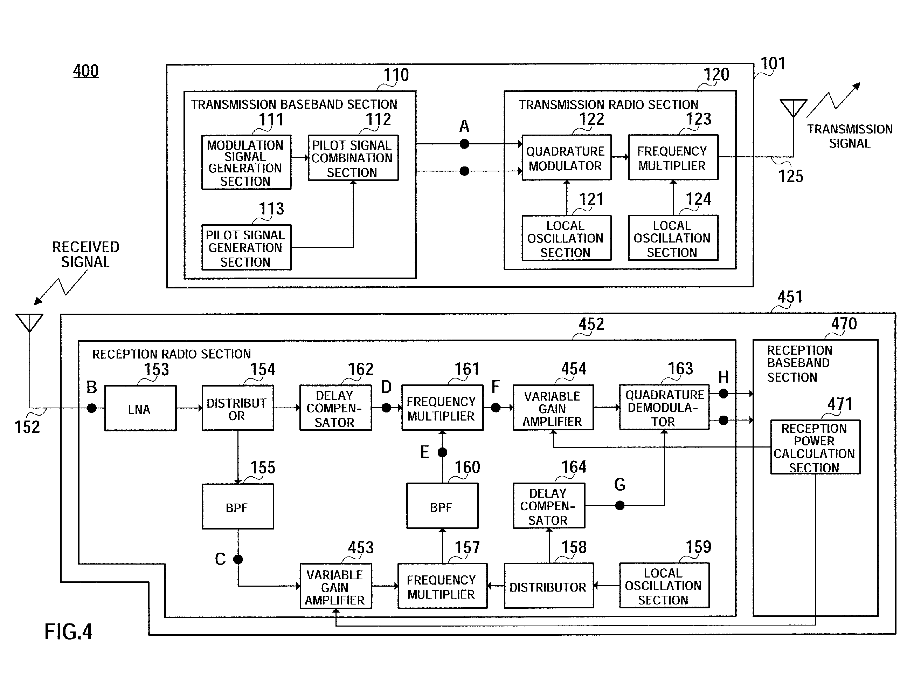

FIG.4 is a block diagram showing a configuration of a radio system according to this Embodiment 3. Compared to radio reception apparatus 151 of radio system 100 in Embodiment 1, radio reception apparatus 451 of radio system 400 shown in FIG.4 only differs in that variable gain amplifier 453 is added instead of amplifier 156, variable gain amplifier 454 is added between frequency multiplier 161 and quadrature demodulator 163, and reception baseband section 470 provided with reception power calculation section 471 is provided instead of reception baseband section 170, and the rest of the components are the same. Therefore, the explanations of the same components will be omitted and only different parts will be explained.

Reception power calculation section 471 calculates power of a received signal from power of signal H outputted from quadrature demodulator 163. Reception baseband section 470 gives control signals corresponding to this calculation result to variable gain amplifier 453 and variable gain amplifier 454, and controls the gains thereof.

By so doing, variable gain amplifier 453 that receives the control signal keeps a constant input level for frequency multiplier 157, and variable gain amplifier 454 keeps a constant input level for quadrature demodulator 163, so that it is possible to keep a constant input level for reception baseband section 470.

As described above, it is possible to keep a constant input level for the reception baseband section even when the reception level changes and thereby realize a radio system that operates over a wide range of reception level.

Thus, according to Embodiment 3, radio reception apparatus 451 is provided with: antenna 152 that receives a radio signal in which a modulation signal having no signal on a center frequency and a pilot signal having a center frequency identical to the center frequency are multiplexed; distributor 154 that distributes the received signal received at antenna 152 to two directions; bandpass filter 155 that extracts a signal component corresponding to the pilot signal from the one received signal distributed from distributor 154; frequency multiplier 157 that performs frequency conversion on the signal component corresponding to the extracted pilot signal using one local oscillation signal which is generated by local oscillation section 159 and distributed to the two directions by distributor 158; delay compensator 162 that gives a delay to the other received signal distributed by distributor 154; frequency multiplier 161 that frequency-multiplies the signal component corresponding to the pilot signal subjected to frequency conversion in frequency multiplier 157 by the other received signal to which a delay is added in delay compensator 162; delay compensator 164 that gives a delay to the other local oscillation signal distributed to the two directions by distributor 158; and quadrature demodulator 163 that frequency-multiplies the received signal after the frequency multiplication by frequency multiplier 161 in the other local oscillation signal to which a delay is added by delay compensator 164, and performs quadrature demodulation.

Furthermore, radio reception apparatus 451 is also provided with: reception power calculation section 471 that calculates a reception power value of the received signal based on the amplitude of the output signal of quadrature demodulator 163; variable gain amplifier 453 that is disposed before frequency multiplier 157 and amplifies a signal component corresponding to the pilot signal extracted by bandpass filter 155 according to the reception power value; and variable gain amplifier 454 that is disposed before quadrature demodulator 163 and amplifies the signal after frequency multiplication by frequency multiplier 161 according to the reception power value.

By so doing, even when the reception power received at antenna 152 fluctuates, it is possible to realize amplification according to the reception power value, keep a constant input level for frequency multiplier 157 and the input level for quadrature demodulator 163, and thereby prevent deterioration of the phase noise characteristic even when the reception power fluctuates.

(Embodiment 4)

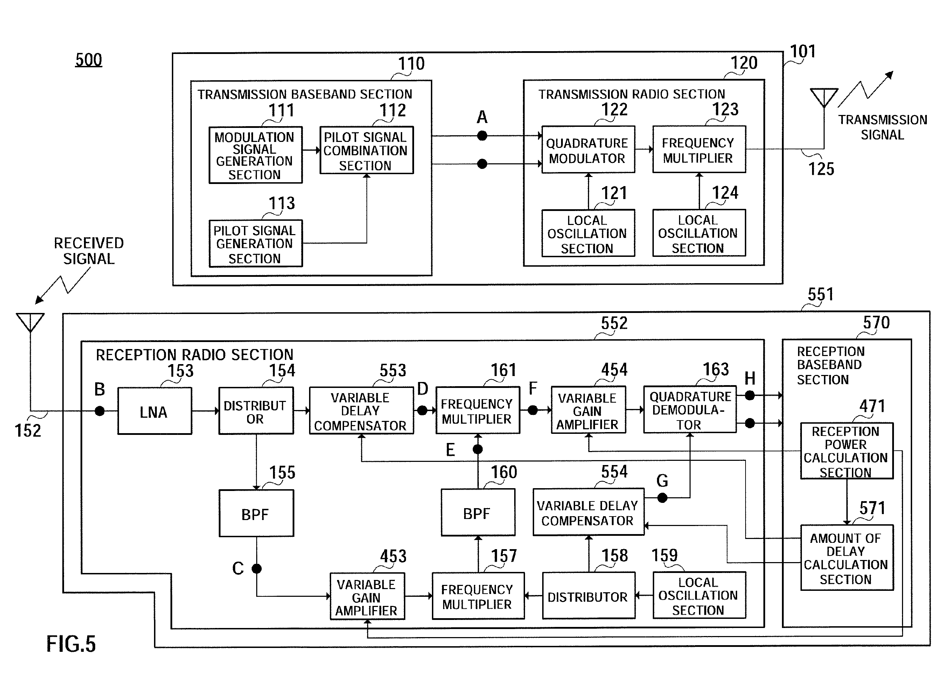

FIG.5 is a block diagram showing a configuration of a radio system according to this Embodiment 4. Compared to radio reception apparatus 451 of radio system 400 in Embodiment 3, radio reception apparatus 551 of radio system 500 shown in FIG.5 only differs in that delay compensator 162 is replaced by variable delay compensator 553, delay compensator 164 is replaced by variable delay compensator 554, reception baseband section 470 is replaced by reception baseband section 570 provided with reception power calculation section 471, and amount of delay calculation section 571, and the rest of the components are the same. Therefore, the explanations of the same components will be omitted, and only different parts will be explained.

At variable gain amplifier 453 and variable gain amplifier 454 that change gains according to reception levels, an amount of delay changes simultaneously with changes in the gains.

Thus, amount of delay calculation section 571 determines the amount of delay of variable delay compensator 553 and variable delay compensator 554 using control signals from reception power calculation section 471 that controls the gains of variable gain amplifier 453 and variable gain amplifier 454, and outputs control signals to variable gain amplifier 453 and variable gain amplifier 454.

Variable delay compensator 553 that has received the control signal corrects the change in the amount of delay at variable gain amplifier 453, and variable delay compensator 554 corrects the change in the amount of delay at variable gain amplifier 454.

As described above, even when a reception level changes, it is possible to keep a constant input level for reception baseband section 570 and correct change in the amount of delay within the system caused by the change in the reception level, and thereby realize a radio system that stably operates over a wide range of reception level.

Thus, according to Embodiment 4, radio reception apparatus 551 is provided with: antenna 152 that receives a radio signal in which a modulation signal having no signal on a center frequency and a pilot signal having a center frequency identical to the center frequency are multiplexed; distributor 154 that distributes the received signal received at antenna 152 to two directions; bandpass filter 155 that extracts a signal component corresponding to the pilot signal from the one received signal distributed from distributor 154; frequency multiplier 157 that performs frequency conversion on the signal component corresponding to the extracted pilot signal using one local oscillation signal which is generated by local oscillation section 159 and distributed to the two directions by distributor 158; variable delay compensator 553 that gives a delay to the other received signal distributed by distributor 154; frequency multiplier 161 that frequency-multiplies the signal component corresponding to the pilot signal subjected to frequency conversion in frequency multiplier 157 by the other received signal to which a delay is added in delay compensator 162; variable delay compensator 554 that gives a delay to the other local oscillation signal distributed to the two directions by distributor 158; and quadrature demodulator 163 that frequency-multiplies the received signal after the frequency multiplication by frequency multiplier 161 in the other local oscillation signal to which a delay is added by delay compensator 164, and performs quadrature demodulation.

Furthermore, radio reception apparatus 551 is provided with reception power calculation section 471 that calculates a reception power value of the received signal based on the amplitude of the output signal of quadrature demodulator 163, and amount of delay calculation section 571 that calculates the amount of delay based on the reception power value, and variable delay compensator 553 and variable delay compensator 554 change delays to be added based on the amount of delay.

By so doing, it is also possible to correct change in the amount of delay within the system produced due to the change in the reception level and match the phases of input signals in frequency multiplier 161 and quadrature demodulator 163, and thereby improve the phase noise characteristic.

(Embodiment 5)

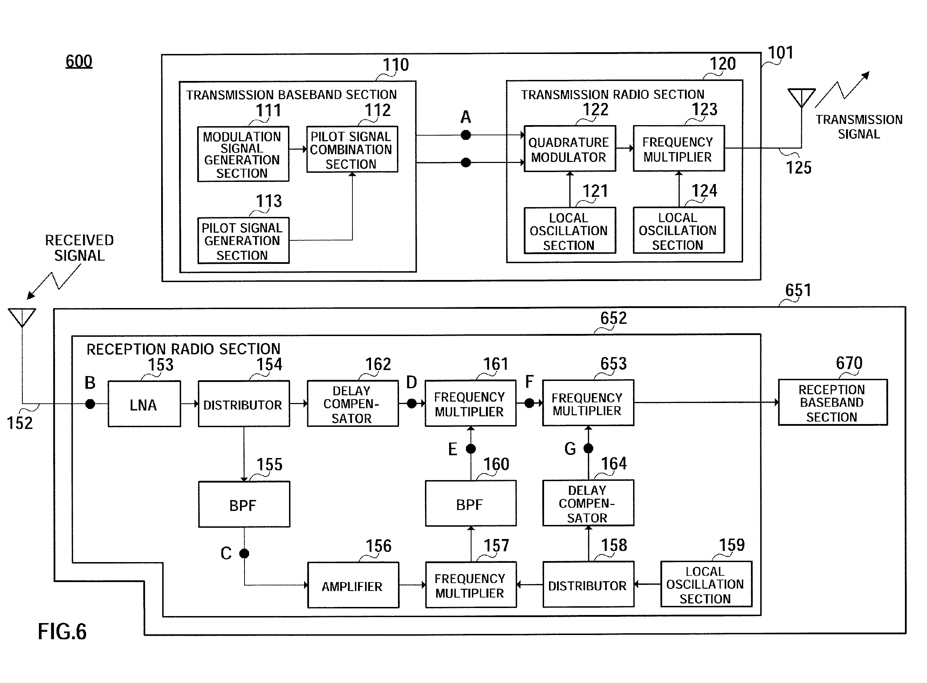

FIG.6 is a block diagram showing a configuration of a radio system according to Embodiment 5 of the present invention. Compared to radio reception apparatus 151 of radio system 100 in Embodiment 1, radio reception apparatus 651 of radio system 600 shown in FIG.6 only differs in that quadrature demodulator 163 is replaced by frequency multiplier 653, and reception baseband section 170 is replaced by reception baseband section 670, and the rest of the components are the same. Therefore, the explanations of the same components will be omitted, and only different parts will be explained.

Frequency multiplier 653 multiplies signal F outputted from frequency multiplier 161 by signal G to which a delay is added by delay compensator 164, and outputs the multiplication result to reception baseband section 670. Reception baseband section 670 performs reception processing on this signal.

Thus, this embodiment is also applicable to a scheme where reception radio section 652 performs only frequency multiplication and reception base band section 670 performs quadrature demodulation, so that it is possible to minimize degradation of communication quality due to quadrature errors produced at the quadrature demodulator.

(Embodiment 6)

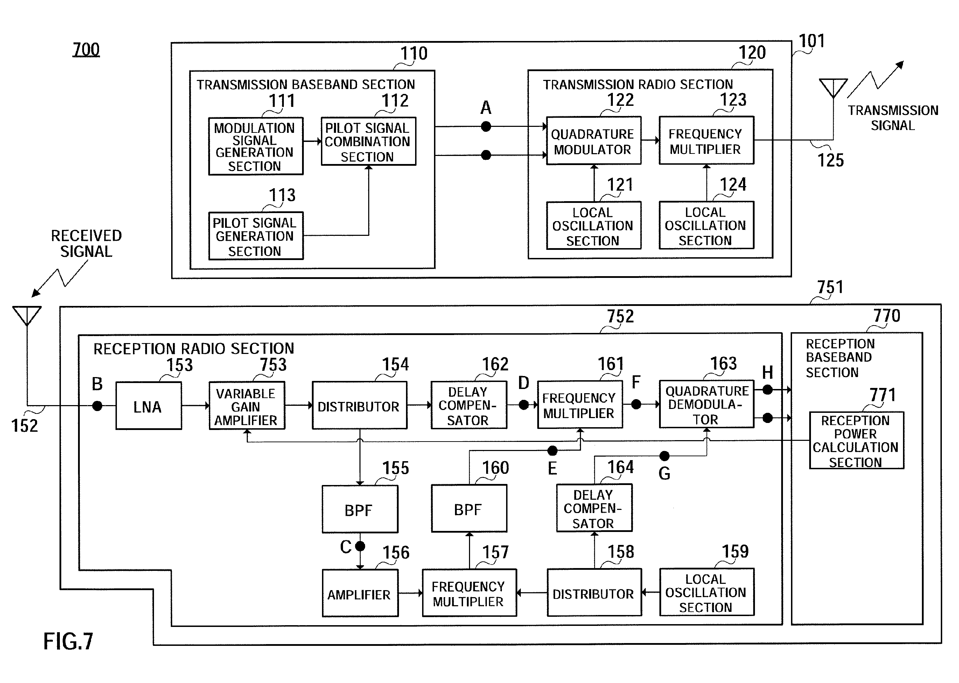

FIG.7 is a block diagram showing a configuration of a radio system according to Embodiment 6 of the present invention. Compared to radio reception apparatus 151 of radio system 100 in Embodiment 1, radio reception apparatus 751 of radio system 700 shown in FIG.7 only differs in that variable gain amplifier 753 is added between amplifier 153 and distributor 154, and reception baseband section 170 is replaced by reception baseband section 770 provided with reception power calculation section 771, and the rest of the components are the same. Therefore, the explanations of the same components will be omitted, and only different parts will be explained.

Reception power calculation section 771 calculates power of a received signal from power of signal H outputted from quadrature demodulator 163. Reception baseband section 770 then gives a control signal according to this calculation result to variable gain amplifier 753, and controls the gain.

Variable gain amplifier 753 amplifies the signal outputted from amplifier 153 based on a control signal received from reception baseband section 770, and keeps an input signal for distributor 154 at a constant level.

As described above, since power adjustment is performed before distributor 154 distributes a received signal, power adjustment is not necessary performed on the received signal and pilot signal separately, so that it is possible to realize a radio system in a simple configuration that operates over a wide range of reception level.

Reception power calculation section 771 and reception power calculation section 471 in Embodiment 3 and Embodiment 4 are intended to calculate the power of a received signal from the power of signal H and differ only in the place where this calculation result is outputted, so that this embodiment is also applicable to Embodiment 3 and Embodiment 4.

Thus, according to Embodiment 6, radio reception apparatus 751 is provided with: antenna 152 that receives a radio signal in which a modulation signal having no signal on a center frequency and a pilot signal having a center frequency identical to the center frequency are multiplexed; distributor 154 that distributes the received signal received at antenna 152 to two directions; bandpass filter 155 that extracts a signal component corresponding to the pilot signal from the one received signal distributed from distributor 154; frequency multiplier 157 that performs frequency conversion on the signal component corresponding to the extracted pilot signal using one local oscillation signal which is generated by local oscillation section 159 and distributed to the two directions by distributor 158; delay compensator 162 that gives a delay to the other received signal distributed by distributor 154; frequency multiplier 161 that frequency-multiplies the signal component corresponding to the pilot signal subjected to frequency conversion in frequency multiplier 157 by the other received signal to which a delay is added in delay compensator 162; delay compensator 164 that gives a delay to the other local oscillation signal distributed to the two directions by distributor 158; and quadrature demodulator 163 that frequency-multiplies the received signal after the frequency multiplication by frequency multiplier 161 in the other local oscillation signal to which a delay is added by delay compensator 164, and performs quadrature demodulation.

Furthermore, radio reception section 751 is provided with reception power calculation section 771 that calculates a reception power value of the received signal based on the amplitude of the output signal of quadrature demodulator 163, and variable gain amplifier 753 that is disposed before distributor 154 and amplifies the received signal according to the reception power value.

By so doing, since power adjustment is performed before distributor 154 distributes the received signal, power adjustment is not necessary to be performed on the received signal and pilot signal separately, so that it is possible to keep the constant input level for quadrature demodulator 163 in a simple configuration.

(Embodiment 7)

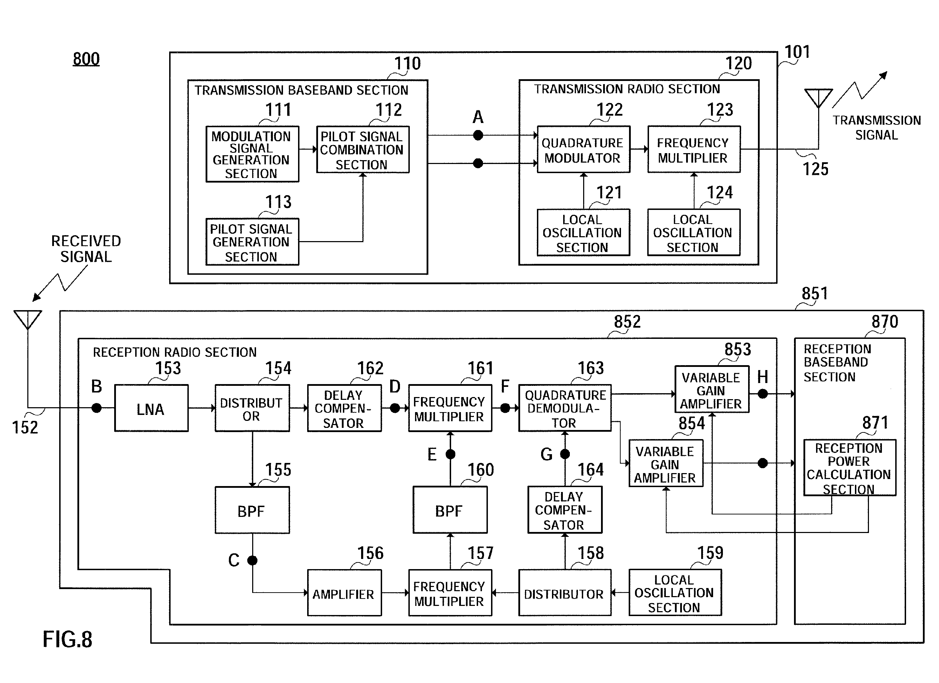

FIG.8 is a block diagram showing a configuration of a radio system according to this Embodiment 7. Compared to radio reception apparatus 151 of radio system 100 in Embodiment 1, radio reception apparatus 851 of radio system 800 shown in FIG.7 only differs in that variable gain amplifier 853 and variable gain amplifier 854 are added after quadrature demodulator 163, and reception baseband section 170 is replaced by reception baseband section 870 provided with reception power calculation section 871, and the rest of the components are the same. Therefore, the explanations of the same components will be omitted, and only different parts will be explained.

Reception baseband section 870 receives signal H from quadrature demodulator 163, and calculates the power of signal H in reception power calculation section 871. Reception baseband section 870 gives a control signal corresponding to this calculation result to variable gain amplifier 853 and variable gain amplifier 854, and controls those gains. By so doing, it is possible to respond to a wide range of reception level fluctuation.

Thus, according to Embodiment 7, radio reception apparatus 851 is provided with: antenna 152 that receives a radio signal in which a modulation signal having no signal on a center frequency and a pilot signal having a center frequency identical to the center frequency are multiplexed; distributor 154 that distributes the received signal received at antenna 152 to two directions; bandpass filter 155 that extracts a signal component corresponding to the pilot signal from the one received signal distributed from distributor 154; frequency multiplier 157 that performs frequency conversion on the signal component corresponding to the extracted pilot signal using one local oscillation signal which is generated by local oscillation section 159 and distributed to the two directions by distributor 158; delay compensator 162 that gives a delay to the other received signal distributed by distributor 154; frequency multiplier 161 that frequency-multiplies the signal component corresponding to the pilot signal subjected to frequency conversion in frequency multiplier 157 by the other received signal to which a delay is added in delay compensator 162; delay compensator 164 that gives a delay to the other local oscillation signal distributed to the two directions by distributor 158; and quadrature demodulator 163 that frequency-multiplies the received signal after the frequency multiplication by frequency multiplier 161 in the other local oscillation signal to which a delay is added by delay compensator 164, and performs quadrature demodulation.

Furthermore, radio reception apparatus 851 is also provided with reception power calculation section 871 that calculates the reception power value of the received signal based on the amplitude of the output signal of quadrature demodulator 163, variable gain amplification section 853 and variable gain amplification section 854 that amplify the signal subjected to quadrature demodulation by quadrature demodulation section 163 according to the reception power value.

By so doing, it is possible to prevent deterioration of the phase noise characteristic even when the reception power fluctuates.

(Embodiment 8)

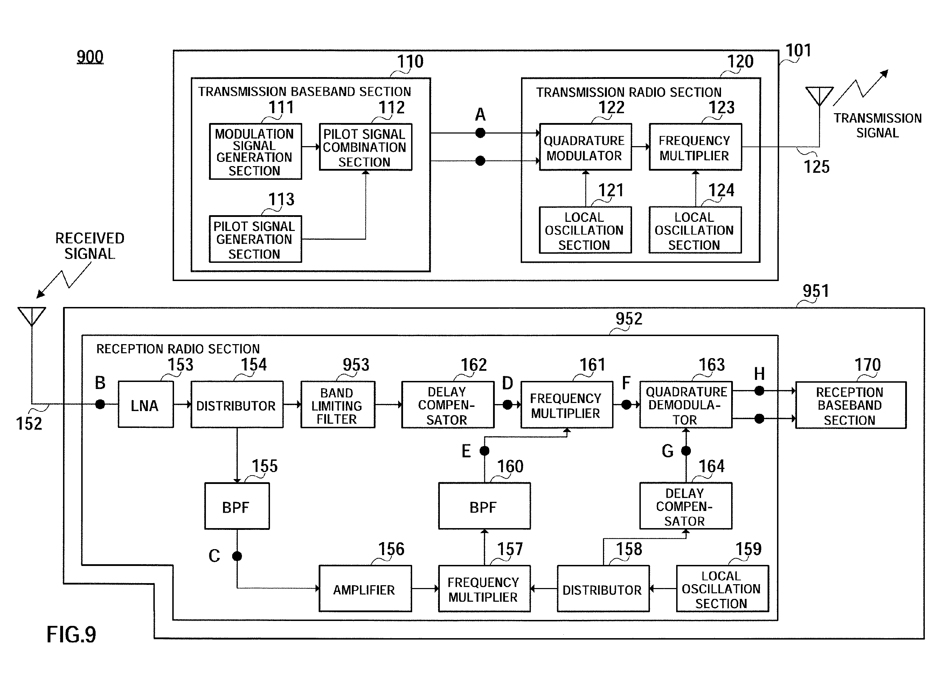

FIG.9 is a block diagram showing a configuration of a radio system according to Embodiment 8. Compared to radio reception apparatus 151 in Embodiment 1, radio reception apparatus 951 of radio system 900 shown in FIG. 9 only differs in that band limiting filter 953 is provided after distributor 154, and the rest of the components are the same. Therefore, the explanations of the same components will be omitted and only different parts will be explained.

Here, when a pilot signal component such as signal D is on the center frequency, a DC offset may occur, and the reception characteristic may deteriorate.

Thus, band limiting filter 953 is set so as to remove only a pilot signal component from a signal received from distributor 154. For this reason, signal D, which is the output signal from delay compensator 162 in this embodiment, is in a state where no peak corresponding to a pilot signal component in a center frequency area is included.

Then, frequency multiplier 161 multiplies signal D, from which a peak corresponding to a pilot signal component in a center frequency area is removed, by signal E, and gives the multiplication result to quadrature demodulator 163. By so doing, band limiting filter 953 in the modulation signal branch removes the peak corresponding to the pilot signal component in the center frequency area in the signal inputted to frequency multiplier 161, so that it is possible to remove influences of DC offsets in the signal inputted to frequency multiplier 161. Thus, it is possible to prevent a distortion in the signal inputted from frequency multiplier 161 to quadrature demodulator 163 and thereby improve the reception characteristic. That is, it is possible to improve the reception characteristics by preventing the occurrence of a distortion caused by DC offsets.

Thus, according to Embodiment 8, radio reception apparatus 951 is provided with: antenna 152 that receives a radio signal in which a modulation signal having no signal on a center frequency and a pilot signal having a center frequency identical to the center frequency are multiplexed; distributor 154 that distributes the received signal received at antenna 152 to two directions; bandpass filter 155 that extracts a signal component corresponding to the pilot signal from the one received signal distributed from distributor 154; frequency multiplier 157 that performs frequency conversion on the signal component corresponding to the extracted pilot signal using one local oscillation signal which is generated by local oscillation section 159 and distributed to the two directions by distributor 158; delay compensator 162 that gives a delay to the other received signal distributed by distributor 154; frequency multiplier 161 that frequency-multiplies the signal component corresponding to the pilot signal subjected to frequency conversion in frequency multiplier 157 by the other received signal to which a delay is added in delay compensator 162; delay compensator 164 that gives a delay to the other local oscillation signal distributed to the two directions by distributor 158; and quadrature demodulator 163 that frequency-multiplies the received signal after the frequency multiplication by frequency multiplier 161 in the other local oscillation signal to which a delay is added by delay compensator 164, and performs quadrature demodulation.

Furthermore, radio reception apparatus 951 is provided with band limiting filter 953 that is disposed before delay compensator 162, and removes a signal component, which corresponds to the pilot signal having a center frequency identical to the center frequency of the other received signal distributed by distributor 154, from that received signal.

By so doing, band limiting filter 953 removes the peak corresponding to the pilot signal component in the center frequency area in the signal inputted to frequency multiplier 161, so that it ispossible to remove influences of DC offsets in the signal inputted to frequency multiplier 161. For this reason, it is possible to prevent distortion in the signal inputted to quadrature demodulator 163 and thereby improve the reception characteristic. Although band limiting filter 953 is provided between distributor 154 and delay adder 162 in the above description, this is by no means limiting, and similar effects can also be obtained when band limiting filter 953 is disposed between delay compensator 162 and frequency multiplier 161.

The present application is based on Japanese Patent Application No.2004-089726 filed on March 25, 2004, the entire content of which is expressly incorporated by reference herein.

Industrial Applicability

The radio system and radio communication apparatus of the present invention removes phase noise superimposed on a received signal and also removes phase noise produced within the system of a reception radio section, and is thereby suitable for use in improving a phase noise characteristic.

**Claims**

1. A radio system comprising:

    a radio transmission apparatus comprising a transmission section that transmits a radio signal in which a modulation signal having no signal on a center frequency and a pilot signal having a center frequency identical to said center frequency are multiplexed; and
    a radio reception apparatus comprising:

        an antenna that receives said radio signal;
        a first distribution section that distributes the received signal received at said antenna to two directions;
        an extraction section that extracts a signal component corresponding to said pilot signal from one received signal distributed by said first distribution section;
        a second distribution section that distributes a local oscillation signal from a local oscillation signal generation section to two directions;
        a first frequency multiplication section that performs frequency conversion on said signal component corresponding to said extracted pilot signal using the one local oscillation signal distributed by said second distribution section;
        a first delay addition section that gives a delay to the other received signal distributed by said first distribution section;
        a second frequency multiplication section that frequency-multiplies said signal component corresponding to said pilot signal subjected to frequency conversion in said first frequency multiplication section by said other received signal to which the delay has been added in said first delay addition section;
        a second delay addition section that gives a delay to the other local oscillation signal distributed by said second distribution section; and
        a quadrature demodulation section that frequency-multiplies the received signal after frequency multiplication in said second frequency multiplication section by said other local oscillation signal to which the delay has been added in said second delay addition section, and performs quadrature demodulation.

2. A radio reception apparatus comprising:

an antenna that receives a radio signal in which a modulation signal having no signal on a center frequency and a pilot signal having a center frequency identical to said center frequency are multiplexed;

a first distribution section that distributes the received signal received at said antenna to two directions;

an extraction section that extracts a signal component corresponding to said pilot signal from one received signal distributed by said first distribution section;

a second distribution section that distributes a local oscillation signal from a local oscillation signal generation section to two directions;

a first frequency multiplication section that performs frequency conversion on said signal component corresponding to said extracted pilot signal using the one local oscillation signal distributed by said second distribution section;

a first delay addition section that gives a delay to the other received signal distributed by said first distribution section;

a second frequency multiplication section that frequency-multiplies a signal component corresponding to said pilot signal subjected to frequency conversion in said first frequency multiplication section by said other received signal to which the delay has been added in said first delay addition section;

a second delay addition section that gives a delay to the other local oscillation signal distributed by said second distribution section; and

a quadrature demodulation section that frequency-multiplies the received signal after frequency multiplication in said second frequency multiplication section by said other local oscillation signal to which the delay has been added by said second delay addition section, and performs quadrature demodulation.

3. The radio reception apparatus according to claim 2, further comprising an amplification section that amplifies said one received signal distributed by said first distribution section, and outputs the amplified signal to said extraction section.

4. The radio reception apparatus according to claim 2, further comprising:

a reception power calculation section that calculates a reception power value of said received signal based on an amplitude of the output signal of said quadrature demodulation section;

a first variable gain amplification section that is disposed before said first frequency multiplication section, and amplifies said signal component corresponding to said pilot signal extracted by said extraction section according to said reception power value; and

a second variable gain amplification section that is disposed before said quadrature demodulation section, and amplifies the signal after frequency-multiplication in said second frequency multiplication section according to said reception power value.

5. The radio reception apparatus according to claim 2, further comprising:

a reception power calculation section that calculates a reception power value of said received signal based on the amplitude of the output signal of said quadrature demodulation section; and

a variable gain amplification section that is disposed before said first distribution section, and amplifies said received signal according to said reception power value.

6. The radio reception apparatus according to claim 2, further comprising:

a reception power calculation section that calculates a reception power value of said received signal based on the amplitude of the output signal of said quadrature demodulation section; and

amount of delay calculation section that calculates an amount of delay based on said reception power value, wherein said first delay addition section and said second delay addition section change delays to be added based on said amount of delay.

7. The radio reception apparatus according to claim 2, wherein said quadrature demodulation section is used as another frequency multiplication section that frequency-multiplies the output signal of said second frequency multiplication section by the output signal of said second delay addition section.

8. The radio reception apparatus according to claim 2, further comprising:

a reception power calculation section that calculates a reception power value of said received signal based on the amplitude of the output signal of said quadrature demodulation section; and
a variable gain amplification section that amplifies the signal subjected to quadrature modulation by quadrature demodulation section according to said reception power value.

9. The radio reception apparatus according to claim 2, further comprising a band limiting filter that is disposed before said first delay addition section, and removes a signal component corresponding to a pilot signal having a center frequency identical to the center frequency of said other received signal distributed by said first distribution section from said other received signal.

FIG.1

EP 1 724 956 A1

EP 1 724 956 A1

FIG.2A

FIG.2E

FIG.2B

FIG.2F

FIG.2C

FIG.2G

FIG.2D

FIG.2H

EP 1 724 956 A1

**300**

**101**

**110**

**TRANSMISSION BASEBAND SECTION**

**111** MODULATION SIGNAL GENERATION SECTION

**112** PILOT SIGNAL COMBINATION SECTION

**113** PILOT SIGNAL GENERATION SECTION

A

**120** TRANSMISSION RADIO SECTION

**122** QUADRATURE MODULATOR

**123** FREQUENCY MULTIPLIER

**121** LOCAL OSCILLATION SECTION

**124** LOCAL OSCILLATION SECTION

**125**

TRANSMISSION SIGNAL

RECEIVED SIGNAL

**351**

**352**

RECEPTION RADIO SECTION

**152**

B

**153** LNA

**154** DISTRIBUTOR

**162** DELAY COMPENSATOR

D

**161** FREQUENCY MULTIPLIER

F

**163** QUADRATURE DEMODULATOR

H

**170** RECEPTION BASEBAND SECTION

**353** LNA

E

**160** BPF

G

**164** DELAY COMPENSATOR

**155** BPF

C

**156** AMPLIFIER

**157** FREQUENCY MULTIPLIER

**158** DISTRIBUTOR

**159** LOCAL OSCILLATION SECTION

FIG.3

400

**TRANSMISSION BASEBAND SECTION** 110
111 MODULATION SIGNAL GENERATION SECTION
112 PILOT SIGNAL COMBINATION SECTION
113 PILOT SIGNAL GENERATION SECTION

101

**TRANSMISSION RADIO SECTION** 120
122 QUADRATURE MODULATOR
123 FREQUENCY MULTIPLIER
121 LOCAL OSCILLATION SECTION
124 LOCAL OSCILLATION SECTION
125

A

TRANSMISSION SIGNAL

RECEIVED SIGNAL

152

**RECEPTION RADIO SECTION** 452
153 LNA
154 DISTRIBUTOR
155 BPF
453 VARIABLE GAIN AMPLIFIER
156 FREQUENCY MULTIPLIER
157
160 BPF
161 FREQUENCY MULTIPLIER
162 DELAY COMPENSATOR
158 DISTRIBUTOR
159 LOCAL OSCILLATION SECTION
164 DELAY COMPENSATOR
454 VARIABLE GAIN AMPLIFIER
163 QUADRATURE DEMODULATOR

B C D E F G H

**RECEPTION BASEBAND SECTION** 451
470
471 RECEPTION POWER CALCULATION SECTION

**FIG.4**

FIG.5

EP 1 724 956 A1

EP 1 724 956 A1

**600**

**101**

**110**

TRANSMISSION BASEBAND SECTION

**111**

MODULATION SIGNAL GENERATION SECTION

**112**

PILOT SIGNAL COMBINATION SECTION

**113**

PILOT SIGNAL GENERATION SECTION

A

**120**

TRANSMISSION RADIO SECTION

**122**

QUADRATURE MODULATOR

**123**

FREQUENCY MULTIPLIER

**121**

LOCAL OSCILLATION SECTION

**124**

LOCAL OSCILLATION SECTION

**125**

TRANSMISSION SIGNAL

RECEIVED SIGNAL

**651**

**652**

**152**

RECEPTION RADIO SECTION

B

**153**

LNA

**154**

DISTRIBUTOR

**162**

DELAY COMPEN-SATOR

D

**161**

FREQUENCY MULTIPLIER

F

**653**

FREQUENCY MULTIPLIER

**670**

RECEPTION BASEBAND SECTION

**155**

BPF

C

E

**160**

BPF

G

**164**

DELAY COMPEN-SATOR

**156**

AMPLIFIER

**157**

FREQUENCY MULTIPLIER

**158**

DISTRIBUTOR

**159**

LOCAL OSCILLATION SECTION

FIG.6

FIG.7

FIG.8

EP 1 724 956 A1

FIG.9

900

101

TRANSMISSION SIGNAL

120 TRANSMISSION RADIO SECTION

125

123 FREQUENCY MULTIPLIER
124 LOCAL OSCILLATION SECTION
122 QUADRATURE MODULATOR
121 LOCAL OSCILLATION SECTION

A

110 TRANSMISSION BASEBAND SECTION
112 PILOT SIGNAL COMBINATION SECTION
111 MODULATION SIGNAL GENERATION SECTION
113 PILOT SIGNAL GENERATION SECTION

951

170 RECEPTION BASEBAND SECTION

952

163 QUADRATURE DEMODULATOR
164 DELAY COMPENSATOR
159 LOCAL OSCILLATION SECTION
158 DISTRIBUTOR
161 FREQUENCY MULTIPLIER
162 DELAY COMPENSATOR
160 BPF
157 FREQUENCY MULTIPLIER
156 AMPLIFIER

H  G  F  E  D

953 BAND LIMITING FILTER
155 BPF
C
154 DISTRIBUTOR
153 LNA
B
RECEPTION RADIO SECTION

152

RECEIVED SIGNAL

PILOT BRANCH

A ——50—— B ——51—— C ——52—— H ——70—— I ——71——

INPUT o—→ | DISTRIBUTOR | → | BPF1 | → | LIMITER AMPLIFIER | → | FREQUENCY MULTIPLIER 1 | → | BPF2 | —→o OUTPUT

E ——61—— F ——62—— G ——63——

| FREQUENCY MULTIPLIER 2 | → | BPF3 | → | DELAY COMPENSATOR |

D ——60——

| LOCAL OSCILLATOR |

SIGNAL BRANCH

PRIOR ART

FIG.10

**FIG.11A**

LO    PILOT    BST-OFDM

INPUT PHASE NOISE

FREQUENCY

PHASE NOISE ORIGINATED WITHIN SYSTEM

**FIG.11B·C**

LO    PILOT    BST-OFDM

INPUT PHASE NOISE

FREQUENCY

PHASE NOISE ORIGINATED WITHIN SYSTEM

**FIG.11D**

LO    PILOT    BST-OFDM

INPUT PHASE NOISE

FREQUENCY

PHASE NOISE ORIGINATED WITHIN SYSTEM

**FIG.11E**

PILOT    BST-OFDM            LO

DIFFERENCE
COMPONENT

SUM
COMPONENT

FREQUENCY

**FIG.11F**

PILOT    BST-OFDM

DIFFERENCE
COMPONENT

FREQUENCY

**FIG.11G**

PILOT    BST-OFDM

DIFFERENCE
COMPONENT

FREQUENCY

**FIG.11H**

BST-OFDM    PILOT    $f_{PLT}$    PILOT    BST-OFDM

DIFFERENCE
COMPONENT

SUM
COMPONENT

FREQUEN
CY

**FIG.11I**

BST-OFDM    PILOT

DIFFERENCE
COMPONENT

FREQUENCY

PRIOR ART

## INTERNATIONAL SEARCH REPORT

| International application No. |
|---|
| PCT/JP2005/005237 |

A. CLASSIFICATION OF SUBJECT MATTER
  Int.Cl$^7$  H04J11/00

According to International Patent Classification (IPC) or to both national classification and IPC

B. FIELDS SEARCHED

Minimum documentation searched (classification system followed by classification symbols)
  Int.Cl$^7$  H04J11/00

Documentation searched other than minimum documentation to the extent that such documents are included in the fields searched
  Jitsuyo Shinan Koho      1922-1996   Jitsuyo Shinan Toroku Koho   1996-2005
  Kokai Jitsuyo Shinan Koho  1971-2005   Toroku Jitsuyo Shinan Koho   1994-2005

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | JP 09-270765 A  (Victor Company Of Japan, Ltd.), 14 October, 1997 (14.10.97), Par. Nos. [0020], [0023], [0037] & EP 788265 A2 | 1-9 |
| A | JP 10-065644 A  (Nippon Hoso Kyokai), 06 March, 1998 (06.03.98), Figs. 2, 4 (Family: none) | 1-9 |
| A | JP 2002-152158 A  (Hitachi Kokusai Electric Inc.), 24 May, 2002 (24.05.02), Fig. 5 (Family: none) | 1-9 |

| ☒ Further documents are listed in the continuation of Box C. | ☐ See patent family annex. |
|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 13 June, 2005 (13.06.05) | 28 June, 2005 (28.06.05) |

| Name and mailing address of the ISA/ | Authorized officer |
|---|---|
| Japanese Patent Office | |
| Facsimile No. | Telephone No. |

Form PCT/ISA/210 (second sheet) (January 2004)

**INTERNATIONAL SEARCH REPORT**

International application No.

PCT/JP2005/005237

C (Continuation). DOCUMENTS CONSIDERED TO BE RELEVANT

| Category* | Citation of document, with indication, where appropriate, of the relevant passages | Relevant to claim No. |
|---|---|---|
| A | JP 10-303852 A (Nippon Hoso Kyokai), 13 November, 1998 (13.11.98), Fig. 4 (Family: none) | 1-9 |
| A | JP 2001-203663 A (Victor Company Of Japan, Ltd.), 27 July, 2001 (27.07.01), Fig. 4 (Family: none) | 1-9 |
| A | JP 2000-092142 A (Hitachi Denshi, Ltd.), 31 March, 2000 (31.03.00), Fig. 1 & EP 986207 A2 & US 6813326 B1 | 1-9 |
| A | JP 11-355242 A (Victor Company Of Japan, Ltd.), 24 December, 1999 (24.12.99), Fig. 3 (Family: none) | 1-9 |

Form PCT/ISA/210 (continuation of second sheet) (January 2004)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2002152158 A

- JP 2004089726 A